# EUROPÄISCHE PATENTSCHRIFT

(11) **EP 1 481 201 B1**
(45) Veröffentlichungstag und Bekanntmachung des Hinweises auf die Patenterteilung: **27.02.2008**
(21) Anmeldenummer: 03706524.0
(22) Anmeldetag: 17.02.2003
(51) Int. Cl.: F24C 15/20

(54) **ABZUGSHAUBE UND VERFAHREN ZUR ABSAUGUNG UND/ODER AUFREINIGUNG KONTAMINIERTER TRäGERSTOFFE**
EXTRACTOR HOOD AND METHOD FOR EXTRACTING AND/OR PURIFYING CONTAMINATED CARRIERS
HOTTE D'EXTRACTION ET PROCEDE D'ASPIRATION ET/OU DE PURIFICATION DE SUBSTANCES PORTEUSES CONTAMINEES

(30) Priorität: 27.02.2002 DE 10208488
(43) Veröffentlichungstag der Anmeldung: 01.12.2004
(73) Patentinhaber: BSH Bosch und Siemens Hausgeräte GmbH, 81739 München (DE)
(72) Erfinder: MEINHARDT, Gert, 75053 Gondelsheim (DE); KLEMM, Jochen, 31180 Zizur Mayor (ES)
(86) Internationale Anmeldenummer: PCT/EP2003/001582
(87) Internationale Veröffentlichungsnummer: WO 2003/073007

(56) Entgegenhaltungen:
- EP-A- 0 575 681
- EP-A- 0 726 424
- EP-A- 1 239 226
- WO-A-01/81831
- DE-A- 10 004 558
- JP-A- 11 108 459
- US-A- 5 704 955
- US-B1- 6 293 983

## Beschreibung

Die vorliegende Erfindung betrifft eine Abzugshaube zur Absaugung und/oder Aufreinigung eines mit festen Bestandteilen, wie z.B. Staub, Rauch, oder dergleichen, und/oder flüssigen Stoffen, wie z.B. Wasser, Fett, Öl, Wrasen, oder dergleichen, kontaminierten Trägerstoffes, insbesondere Luft. Ferner betrifft die vorliegende Erfindung ein Verfahren zur Absaugung und/oder Aufreinigung eines entsprechend kontaminierten Trägerstoffes, wobei der kontaminierte Trägerstoff nachfolgend ohne Einschränkung des Anwendungs- und Einsatzbereiches der Erfindung als Dunst bezeichnet wird.

Eine derartige Abzugshaube ist bekannt aus der DE 100 04 558 A1 mit einem Gehäuse und einem Abluftkanal. Auf der in der normalen Betriebsposition der Kochstelle zugewandten Seite der Filterrichtung ist eine Öffnung mit großem Querschnitt vorgesehen, hinter welcher eine Filterhalterung bzw. ein Filtergehäuse für mindestens drei verschiedene, hintereinander durchströmte Filter bzw. Filterschichten vorgesehen ist. Ein Vorfilter kann aus einem metallischen Rahmen mit einer eingesetzten Filtermatte aus Metalldrähten oder dergleichen bestehen. Daran schließen sich in Strömungsrichtung ein feuchtigkeitabsorbierendes Vliesfilter und eine Aktivkohleplatte an. Vor den Filterschichten kann ein Schwallfilter vorgesehen sein, der aus einem U-förmig gebogenen Blech und einem darin eingreifenden L-förmigen Blech besteht. Durch diesen Schwallfilter wird bereits ein Teil der Feuchtigkeit und des Fettes als Kondensat an diesem niedergeschlagen.

Abzugshauben gehören seit langer Zeit zum Stand der Technik und sind beispielsweise in einer modernen Küche eigentlich nicht mehr wegzudenken. Sie dienen dort der Absaugung oder Aufreinigung der mit Dampf und/oder Fett beladenen Küchenluft.

Abzugshauben umfassen in einer Grundform ein Gebläse, eine sich in Abzugsrichtung verjüngend ausgebildete Haube und einen den Gebläseeingang abdeckenden Siebfilter. In der Regel ist bei diesen Abzugshauben die Strömungsgeschwindigkeit der Luft in der Abzugshaubenmitte am größten. Diese Strömungsverhältnisse wirken sich aber insbesondere durch seitliches Entweichen von Dunst ungünstig auf den Wirkungsgrad der Abzugshaube aus. Durch eine saugseitig angeordnete Prallfläche wird bei herkömmlichen Abzugshauben daher versucht, Zonen höherer Luftgeschwindigkeit in den Haubenrandbereich zu erzeugen. Der Wirkungsgrad der Abzugshaube ist aber auch unmittelbar von der Leistung des Gebläses abhängig. Bei einem zu schwachen Gebläse ist der Abtransport der in der Haube befindlichen Küchenluft nicht gewährleistet, so dass die sich dort ansammelnde Küchenluft an den Haubenrändem vorbeiströmt und sich ungefiltert in der Küche verteilt. Zusätzlich ist die Wrasenbildung durch Kondensation der Küchenluft nicht auszuschließen. Ein stärkeres Gebläse könnte diesen Nachteil zumindest teilweise beheben, wäre aber auch mit einer höheren Geräuschemission und Schwingungen sowie mit höheren Anschaffungskosten verbunden.

In der Offenlegungsschrift DE 1 454 643 wird eine Dunstabzugshaube vorgeschlagen, bei der an den freien Rändern der Dunstabzugshaube Zonen höherer Lüftergeschwindigkeiten beispielsweise durch eine dezentrale Lüfteranordnung oder durch eine besondere Gestaltung der Luftführung erzeugt werden. Zusätzlich ist die Prallfläche mit Ansaugöffnungen versehen, so dass ein Teil der Küchenluft durch diese Prallfläche hindurchtreten kann. Zwar wird durch die durch den Ansaugspalt im Randbereich der Haube erzeugte höhere Strömungsgeschwindigkeit ein Entweichen der Küchenluft in außerhalb des Kochfeldes liegende Zonen vermieden, doch ist eine Versottung des Abzugskanals und eine Geruchsbelästigung nur unter Verwendung eines Filters zu reduzieren.

Die in der Offenlegungsschrift DE 27 49 824 beschriebene Abzugshaube weist entweder eine luftundurchlässige oder eine luftdurchlässige mit einem dichten Filtermaterial versehene Prallfläche in Verbindung mit einer Randabsaugung auf. Der hohe Anteil an ungefilterter Luft, die den Ansaugspalt passiert und die dadurch hervorgerufene Versottung des Abluftkanals und eine dadurch hervorgerufene Geruchsbelästigung wirken sich allerdings nachteilig aus.

Die Versottung des Abluftkanals und die Geruchsbelästigung werden bei der in der Patentschrift DE 1 679 553 beschriebenen Dunstabzugshaube, die ebenfalls eine Randabsaugung aufweist, dadurch reduziert, dass der gesamte mittels dem Gebläse transportierte Luftstrom einen Filter durchströmt. Die umlaufende Randabsaugung wird mittels eines Ansaugspaltes bewirkt, der durch eine dem Filter nachgeschaltete Abschirmplatte und dem inneren Wandungsteils der Haube gebildet wird. Das Gebläse, das eine beidseitige Luftansaugung ermöglicht, ist in der Abschirmplatte dabei derart angeordnet, dass die eine Luftansaugseite des Gebläses dem Filter zugewandt ist, während die andere Luftansaugseite mit der durch die Abschirmplatte gebildeten und bis zum Ansaugspalt reichenden Kammer in Verbindung steht, die als Unterdruckkammer fungiert. Die hohe Strömungsgeschwindigkeit, die mittels dieser Anordnung im Ansaugspalt erzeugt wird, und die sehr geringen Filterfläche, die für die den Ansaugspalt passierende Luftmenge zur Verfügung steht, führt aber zu einem schnellen Zusetzen dieser Filterfläche, wodurch eine Verkürzung der Wartungsintervalle hervorgerufen wird.

Durch die Verwendung von mindestens zwei Filterelementen in einer Küchendunstumlufthaube, die in der Gebrauchsmusterschrift DE 7412390 beschrieben wird, wird eine Vergrößerung der Filterfläche, die einem spaltartigen Zuluftkanal, der sich im Bereich des Haubenumfanges befindet, zur Verfügung steht, erzielt. Die Filterelemente sind im Abstand übereinander angeordnet, wobei der zwischen den Filterelementen befindliche Raum mit der Saugseite des gemeinsamen Gebläses verbunden ist. Diese technisch aufwendige Anordnung bedingt allerdings nicht nur eine unvorteilhafte Bauhöhe, sondern verhindert auch eine bedienerfreundliche Handhabung bei Wartungsarbeiten.

Es ist daher die Aufgabe der vorliegenden Erfindung, eine Abzugshaube weiterzubilden und ein verbessertes Verfahren zur Absaugung und/oder Aufreinigung von Dunst zu schaffen, mit dem eine Versottung des Abluftkanals und eine Geruchsbelästigung vermieden und trotzdem eine Verlängerung der Wartungsintervalle der Filtereinheit ermöglicht wird.

Diese Aufgabe wird erfindungsgemäß durch eine Abzugshaube mit dem kennzeichnenden Merkmal von Anspruch 1 und einem Verfahren mit dem kennzeichnenden Merkmal von Anspruch 18 gelöst. Vorteilhafte Weiterbildungen der Erfindung sind Gegenstand der jeweiligen Unteransprüche.

Eine erfindungsgemäße Abzugshaube, die insbesondere in der Küchentechnik, in der Reinraumtechnik, an industriellen Arbeitsstellen, im Bereich von Werkzeugmaschinen oder zur Luftaufbereitung in Raucherecken, oder dergleichen einsetzbar ist, mit dem kennzeichnenden Merkmal des Anspruchs 1 und das Verfahren mit dem Kennzeichen des Anspruchs 18, haben gegenüber dem Stand der Technik den Vorteil, dass unter Verwendung einer der Filtereinheit vorgeschalteten Abschirmung, die sowohl als Prallfläche dient, die einen Teil der auf ihr auftreffenden Trägerstoffmenge an ihren Rand leitet, an dem eine Randabsaugung stattfindet, als auch als Vorfiltereinheit fungiert, die horizontal und/oder vertikal durchströmbar ist und durch die der restliche Teilstrom des abzusaugenden und/oder aufzureinigenden Trägerstoffes gesogen wird, so dass dieser bereits vor Eintritt in eine als Hauptfilter ausgebildete Filtereinheit zu einem gewissen Grade aufgereinigt ist. Dadurch wird die Filtereinheit, durch die der gesamte abzusaugende und/oder aufzureinigende Trägerstoffstrom gesogen wird, unterstützt. Dies hat, neben der Vermeidung der Versottung des Abluftkanals und einer Geruchsbelästigung, eine Reduzierung der Wartungsarbeiten durch eine Verlängerung der Wartungsintervalle der Filtereinheit zur Folge. Die Vorfiltereinheit weist unter Ausnutzung der Wirbelstromtechnik mindestens einen Wirbelstromfilter auf. Als ein derartiges Wirbelstromfilter wird beispielsweise ein Zyklon-, Labyrinth- oder Baffelfilter verwendet. Die Wirkungsweise eines Zyklonfilters, insbesondere eines sogenannten "X-Zyklonfilters", beruht darin, dass mittels Strömungsleitwänden Wirbel erzeugt werden, durch die die Kontaminationen, wie beispielsweise Fetttröpfchen, an die Leitwände geschleudert werden, wobei der Trägerstoff von diesen gereinigt wird. Ähnlich verhält es sich mit Labyrinthfiltem, die die durchströmende Luft stark umlenken und dabei Verdichtungen und Erweiterungen, also Geschwindigkeitsvariationen in der Strömung, aufbauen, wodurch eine Abscheidung der Kontaminationen bewirkt wird. Gemäß der Erfindung wird durch die Abschirmung ein mindestens teilweise umlaufender Ansaugspalt gebildet.

Als Hauptfilter wird eine Filtereinheit bevorzugt in Form mindestens eines Flächenfilter, wie beispielsweise eines Streckmetallfilters oder Vliesfilters, eingesetzt, da in diesem die

Streckmetalldrähte bzw. Fasern leicht versetzt hintereinander angeordnet sind, so dass sich der Trägerstrom um die hintereinander angeordneten Streckmetalldrähte bzw. Fasern durchschlängeln muss, wobei in dem Trägerstrom enthaltene Bestandteile, wie beispielsweise Fetttröpfchen diese Umlenkungen aufgrund ihrer erhöhten Trägheit nicht mit ausführen können und somit an den Drähten bzw. Fasern hängen bleiben und abgeschieden werden.

Nach einer weiteren vorteilhaften Ausgestaltung der Erfindung ist die Trägerstoffdurchlässigkeit der Abschirmung, die beispielsweise durch eine mechanische Querschnittsveränderung der Durchlässe erzeugt wird, einstellbar.

Nach einer weiteren vorteilhaften Ausgestaltung der Erfindung ist durch mindestens eine zusätzliche Fördereinrichtung, die insbesondere durch ein Gebläse gebildet wird, die Durchflussmenge an Trägerstoff durch die Vorfiltereinheit einstellbar. Eine automatisch an die Hauptgebläseeinrichtung gekoppelte oder manuell einstellbare Durchflussmengenregulierung bewirkt eine Optimierung des Wirkungsgrades der Vorfiltereinheit.

Nach einer weiteren vorteilhaften Ausgestaltung der Erfindung ist durch eine Veränderung der Ansaugspaltbreite die Menge des Trägerstoffs, die den Ansaugspalt durchströmt, regulierbar.

Nach einer weiteren vorteilhaften Ausgestaltung der Erfindung ist im Ansaugspalt ebenfalls ein Filter angeordnet, wodurch auch der den Ansaugspalt durchströmende Trägerstoff vor Eintritt in die Filtereinheit vorgereinigt wird.

Nach einer weiteren vorteilhaften Ausgestaltung der Erfindung variiert die Trägerstoffdurchlässigkeit der Abschirmung bereichsabhängig. Dabei wird vorzugsweise die Trägerstoffdurchlässigkeit an einem Randbereich und einem Bereich in der Mitte unterschiedlich ausgebildet. Durch die dadurch erzeugten Strömungsverhältnisse ist eine Optimierung des Wirkungsgrades der Vorfiltereinheit möglich.

Nach einer weiteren vorteilhaften Ausgestaltung der Erfindung ist an dem Gehäuse ein zur Vergrößerung des Einzugsbereiches dienender Schirm angeordnet.

Nach einer diesbezüglichen Ausgestaltung der Erfindung besteht der Schirm zumindest teilweise aus durchsichtigen Material, insbesondere aus einem Glas oder dergleichen. Dadurch wird eine Einschränkung der Sicht beispielsweise auf das unter der Abzugshaube befindliche Kochfeld vermieden. Zusätzlich wird durch das optisch ansprechende Design und die sichtbare Filtertechnik die Ästhetik der erfindungsgemäßen Abzugshaube vergrößert.

Nach einer weiteren vorteilhaften Ausgestaltung der Erfindung ist mindestens eine Beleuchtungseinheit insbesondere in Form mindestens eines Halogenstrahlers in den Schirm, in das Gehäuse, in die Filtereinheit und/oder in die Vorfiltereinheit integriert.

Nach einer diesbezüglichen Ausgestaltung der Erfindung ist die Beleuchtungseinheit dimmbar, so dass eine abgegebene Lichtmenge den jeweiligen Erfordernissen angepasst werden kann.

Nach einer weiteren vorteilhaften Ausgestaltung der Erfindung ist bzw. sind der Schirm, die Filtereinheit und/oder die Vorfiltereinheit schräg zum Gehäuse und/oder einer angrenzenden Wand angeordnet. Durch die schräge Anordnung der Filtereinheit und/oder der Vorfiltereinheit sind diese mit einer größeren Filterfläche einsetzbar. Damit wird die Effizienz der Vorrichtung bei nahezu gleicher Bautiefe erhöht und zudem wird ein Zeitintervall zwischen Reinigungen der Filter verlängert.

Nach einer diesbezüglichen Ausgestaltung der Erfindung ist bzw. sind der Schirm, die Filtereinheit und/oder Vorfiltereinheit aus der waagerechten Position auslenkbar ausgebildet. Dadurch ist eine Anpassung der Abzugshaube an die jeweiligen Gegebenheiten möglich, wie z.B. eine besonders starke Kontamination des Trägerstoffes, die ein weites Abdecken eines Kochfeldes erforderlich macht.

Nach einer weiteren vorteilhaften Ausgestaltung der Erfindung ist bzw. sind der Schirm, die Filtereinheit und/oder die Vorfiltereinheit zur Reinigung oder zum Austausch leicht abnehmbar. Bevorzugt sind diese Elemente aus spülmaschinenfesten Materialien gefertigt, wie z.B. Glas oder Edelstahl.

Nach einer weiteren vorteilhaften Ausgestaltung der Erfindung ist die Fördereinrichtung in Form eines Gebläses im Gehäuse integriert und/oder extern angeordnet. Durch eine wahlweise oder gar zusätzliche externe Anordnung ist auch der Betrieb mehrerer Abzugshauben mit einer entsprechend in der Leistung dimensionierten Fördereinrichtung realisierbar.

Nach einer weiteren vorteilhaften Ausgestaltung der Erfindung wird durch Auswahl der Auslassöffnung ein Abluft- oder Umluftbetrieb ermöglicht.

Nach einer weiteren vorteilhaften Ausgestaltung der Erfindung ist mittels eines Sensors, Messfühlers, oder dergleichen der Verschmutzungs- bzw. Sättigungsgrad der Filtereinheit, der Vorfiltereinheit und/oder des Ansaugspaltfilters bestimmbar und wird optisch und/oder akustisch angezeigt.

Nach einer weiteren vorteilhaften Ausgestaltung der Erfindung signalisiert ein Signal den störungsfreien Betrieb, ein Wartungsintervall und/oder eine Funktionsbeeinträchtigung. Gerade Störungen oder Wartungsintervalle werden optisch und/oder akustisch an einen Anwender ausgegeben.

In einem erfindungsgemäßen Verfahren zur Absaugung und/oder Aufreinigung eines mit festen und/oder flüssigen Stoffen kontaminierten Trägerstoffes, also in einem Hauptanwendungsfall erfindungsgemäßer Vorrichtungen fetthaltiger Dunst einer Kochstelle, mit dem kennzeichnenden Merkmal des Anspruchs 20, insbesondere mittels dem kennzeichnenden Merkmal des Anspruchs 20, insbesondere mittels einer Abzugshaube der vorhergehenden Ansprüche 1 bis 19, passiert zumindest ein Teilstrom des abzusaugenden und/oder aufzureinigenden Trägerstoffes vor Eintritt in die Filtereinheit eine Vorfiltereinheit. Da dieser Teilstrom somit schon zu einem gewissen Grade aufgereinigt ist, wird eine als Hauptfilter ausgebildete Filtereinheit entlastet, durch die der gesamte Trägerstoffstrom hindurch gesogen wird. Dadurch verlängern sich die notwendigen Wartungsintervalle und eine Versottung des Abluftkanals und eine Geruchsbelästigung wird vermieden.

Weitere Vorteile und vorteilhafte Ausgestaltungen der Erfindung sind der nachfolgenden Beschreibung, der Zeichnung und den Ansprüchen entnehmbar.

Nachfolgend werden Ausführungsbeispiele der Erfindung anhand der Zeichnung näher erläutert. In der Zeichnung zeigen:
- Figur 1:: eine skizzierte Darstellung einer skizzierten Schnittdarstellung einer erfindungsgemäßen Abzugshaube in einem Mittelbereich und
- Figur 2:: eine skizzierte Darstellung einer Frontalansicht einer erfindungsgemäßen Abzugshaube.

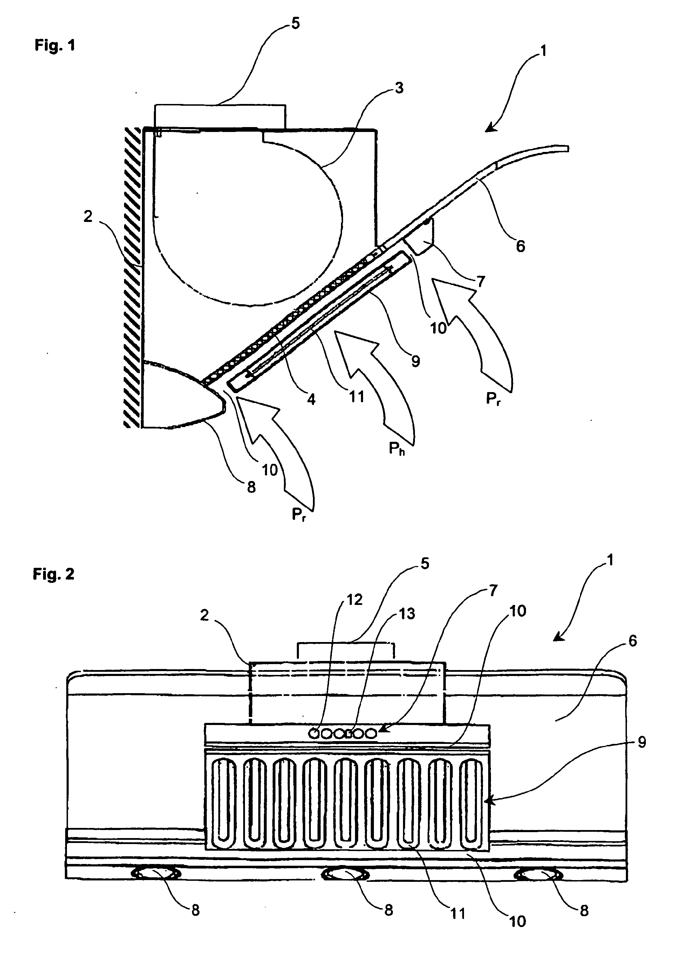

In Figur 1 ist eine Schnittdarstellung einer erfindungsgemäßen Abzugshaube 1 gezeigt, die zur Verdeutlichung erfindungswesentlicher Eigenschaften nur skizziert dargestellt ist. Die Abzugshaube 1 ist aufgrund ihrer hohen Leistung bei geringer Bautiefe insbesondere in der Küche, über Werkzeugmaschinen, in Raucherecken, oder dergleichen einsetzbar.

In einem Gehäuse 2 der Abzugshaube 1 ist ein Gebläse 3 untergebracht. Durch das Gebläse 3 wird die gesamte abzusaugende und/oder aufzureinigende Luft durch eine bevorzugt als Flächenfilter ausgestaltete Filtereinheit 4 gesogen. Die Filtereinheit 4 ist hier als Streckmetallfilter aus Edelstahl ausgebildet, das bei Bedarf durch ein Vliesfilter ergänzt werden kann. Nach dem Durchlaufen der Filtereinheit 4 wird die Luft durch mindestens eine Auslassöffnung 5 geleitet. Die Position der Auslassöffnung 5 ist dabei davon abhängig, ob es sich um eine Abluft-, eine Umluftabzugshaube oder eine Kombination der beiden Funktionsarten handelt. Um die Filterfläche zu vergrößern ist die Filtereinheit 4, die als Hauptfilter beispielsweise der Hauptfettabscheidung dienen soll, schräg am Gehäuse 2 angeordnet. Die Filtereinheit 4 ist von einem Schirm 6 umschlossen. Dieser ist ebenfalls schräg angeordnet, wodurch die Kopffreiheit der an der Kochstelle oder an der Werkzeugmaschine tätigen Person gewährleistet wird. Vorteilhafter ist der Schirm 6 aus einem durchsichtigen Material gefertigt, wobei im vorliegenden Ausführungsbeispiel Glas verwendet wird. An dem Schirm 6 befinden sich beispielsweise aus Anzeige- und Bedienelementen bestehenden Kontrollelemente 7. Denkbar sind hierbei sowohl Kontrollleuchten, Warnleuchten, oder dergleichen als auch Schalter, Regler oder dergleichen, mit denen sowohl die Saugleistung des Gebläses 3 als auch die Beleuchtungseinheit 8 steuerbar bzw. dimmbar sind.

Vor der Filtereinheit 4 ist eine zumindest teilweise luftdurchlässige Abschirmung 9 angeordnet. Diese ist derart dimensioniert, dass ein Ansaugspalt 10 frei bleibt, durch den die abzusaugende und/oder aufzureinigende Luft, die nicht die Abschirmung 9 durchdringt, in Form einer Randabsaugung Pᵣ direkt zu der Filtereinheit 4 gelangen kann. Das Problem einer vermehrten Kondensatsbildung, die bei der Verwendung einer Glasscheibe als Schirm 6 bzw. Sichthaube auftritt, wird durch diese Randabsaugung und die damit einhergehende erhöhte Strömungsgeschwindigkeit der angesaugten und/oder aufzureinigenden Luft weitgehend umgangen. Zusätzlich wird durch die hohe Strömungsgeschwindigkeit der angesaugten und/oder aufzureinigenden Luft in dem Randbereich der eventuell dort befindliche Wrasen kanalisiert angesaugt.

In der Abschirmung 9 ist zusätzlich eine Vorfiltereinheit 11 angeordnet. Bevorzugt wird als Vorfiltereinheit 11 mindestens ein Wirbelstromfilter in Form eines Zyklonfilters oder eines Labyrinthfilters eingesetzt. Die Wirkungsweise eines Zyklonfilters insbesondere des sog. X-Zyklonfilters beruht darin, dass mittels Strömungsleitwänden Wirbel erzeugt werden, durch die die Fetttröpfchen an die Leitwände geschleudert werden, wobei die Luft von Fetttröpfchen gereinigt wird. Ähnlich verhält es sich mit Baffel- bzw. Labyrinthfiltern, die die durchströmende Luft stark umlenken und dabei Verdichtungen und Erweiterungen, also Geschwindigkeitsvariationen in der Strömung aufbauen, und dadurch eine Abscheidung der Fetttröpfchen bewirken. Bei einem Streckmetallfilter oder auch bei einem Vliesfilter sind Fasern und Streckmetalldrähte leicht versetzt hintereinander angeordnet, so dass sich die Luft um die hintereinander angeordneten Drähte/Fasern durchschlängeln muss, wobei in der Luft enthaltene Fetttröpfchen diese Umlenkungen aufgrund der erhöhten Trägheit nicht mit ausführen können und somit an den Drähten bzw. Fasern hängen bleiben und abgeschieden werden. Diese durch die Vorfiltereinheit 11 bewirkte Vorreinigung durch Ansaugen eines Teilstroms Pₕ verlängert mithin die Wartungsintervalle der Filtereinheit 4. Idealerweise sind die Filtereinheit 4, die Vorfiltereinheit 11 und der Schirm 6 leicht aus ihrer Position zu lösen, wodurch deren Austausch, oder aber deren Reinigung erleichtert wird. Die genannten Filter 4, 11 werden in Edelstahl ausgeführt und können nach Ablauf eines Einsatzintervalls zum Entfernen der anhaftenden Verunreinigungen auch in einer herkömmlichen Spülmaschine gereinigt werden. Damit entsteht vorteilhafterweise weder Abfall, noch fallen im Zuge einer Wartung Transportwege oder Kundendienst-Einsätze an.

Figur 2 zeigt eine skizzierte Darstellung einer Frontalansicht einer erfindungsgemäßen Abzugshaube 1 analog der Darstellung von Figur 1. Gleiche Elemente und Funktionsblocks erhalten zur Vereinfachung der Beschreibung nachfolgend gleiche Bezugszeichen. In Figur 2 ist erkennbar, dass durch eine Schrägstellung der Abschirmung 9 der Blick auf die Vorfiltereinheit 11 freigegeben ist, wodurch neben der technischen Funktionalität der erfindungsgemäßen Abzugshaube 1 durch die Auswahl besonderer Materialien bzw. Formen eine ästhetische Komponente durch ein optisch ansprechendes Design geschaffen wird. Durch die Auswahl besonderer Materialien bzw. Formen für den Schirm 6 und oder die Kontrollelemente 7 mit einem Schalter und/oder Regler 12, Kontroll- und einer Warnleuchte 13 und durch eine besondere Anordnung der Beleuchtungseinheit 8 wird die Anwenderfreundlichkeit der Abzugshaube 1 noch erhöht und deren Funktionalität betont. Dadurch wird eine erfindungsgemäße Abzugshaube 1 geschaffen, die in der hier dargestellten Konstellation eine Abschirmung 9 aufweist, die eine Randabsaugung ermöglicht, wobei die Fläche der Abschirmung 9 unter Verwendung der Vorfiltereinheit 11 selbst als Filterfläche genutzt wird. Die in Form des erfindungsgemäßen Doppelfiltersystems aus Vorfiltereinheit 11 mit Wirbelstromtechnik mit Randabsaugung und nachfolgendem Hauptfilter bzw. Filtereinheit 4 aus Streckmetall zumindest teilweise sichtbaren Filtertechnik wird als Element mit Design-Wirkung genutzt, so dass erfindungsgemäß eine Abzugshaube 1 geschaffen wird, die ein optisch ansprechendes Design mit einer verbesserten Filtertechnik verbindet. Eine in einer nicht weiter dargestellten Weiterbildung der Erfindung realisierte Schwenkbarkeit von Schirm 6 mindestens mit Vofiltereinheit 11 zusammen erhöht eine bereits durch Schrägstellung der besagten Komponenten nach Figur 2 angedeutete Kopffreiheit beispielsweise beim Kochen auch direkt über einer Kochstelle.

## Patentansprüche

1. Abzugshaube (1) zur Absaugung und/oder Aufreinigung eines mit festen und/oder flüssigen Stoffen kontaminierten Trägerstoffes, insbesondere von Kochdunst,
- mit einem mindestens eine Einlass- und eine Auslassöffnung (5) aufweisenden Gehäuse (2),
- mit einer den Trägerstoff durch das Gehäuse (2) fördernden und in der Förderleistung einstellbaren Fördereinrichtung (3),
- mit einer von dem geförderten Trägerstoff durchströmbaren Filtereinheit (4) und
- mit einer der Filtereinheit (4) auf der Ansaugseite vorgelagerten, teilweise Trägerstoff-durchlässige Abschirmung (9),
wobei die Abschirmung (9) als Vorfiltereinheit (11) ausgestaltet ist,
**dadurch gekennzeichnet,**
**dass** die Vorfiltereinheit (11) unter Ausnutzung einer Wirbelstromtechnik mindestens einen Wirbelstromfilter aufweist, der insbesondere als Zyklon-, Labyrinth- oder Baffelfilter ausgebildet ist, und dass durch die Abschirmung (9) ein mindestens teilweise umlaufender Ansaugspalt (10) gebildet wird.

2. Abzugshaube (1) nach Anspruch 1,
**dadurch gekennzeichnet,**
**dass** die Trägerstoffdurchlässigkeit der Abschirmung (9) einstellbar ist.

3. Abzugshaube (1) nach einem der vorhergehenden Ansprüche,
**dadurch gekennzeichnet,**
**dass** durch mindestens eine zusätzliche Fördereinrichtung die Durchflussmenge an Trägerstoff durch die Vorfiltereinheit (11) einstellbar ist, insbesondere durch ein Gebläse.

4. Abzugshaube (1) nach einem der vorhergehenden Ansprüche,
**dadurch gekennzeichnet,**
**dass** durch eine Veränderung der Ansaugspaltbreite die Menge des Trägerstoffs, die den Ansaugspalt (10) durchströmt, regulierbar ist.

5. Abzugshaube (1) nach einem der vorhergehenden Ansprüche,
**dadurch gekennzeichnet,**
**dass** im Ansaugspalt (10) ebenfalls ein Filter angeordnet ist.

6. Abzugshaube (1) nach einem der vorhergehenden Ansprüche,
**dadurch gekennzeichnet,**
**dass** die Trägerstoffdurchlässigkeit der Abschirmung (9) bereichsabhängig variiert.

7. Abzugshaube (1) nach einem der vorhergehenden Ansprüche,
**dadurch gekennzeichnet,**
**dass** an dem Gehäuse (2) ein zur Vergrößerung eines Einzugsbereiches dienender Schirm (6) angeordnet ist.

8. Abzugshaube (1) nach Anspruch 7,
**dadurch gekennzeichnet,**
**dass** der Schirm (6) zumindest teilweise aus durchsichtigen Material (Glas) besteht.

9. Abzugshaube (1) nach einem der vorhergehenden Ansprüche,
**dadurch gekennzeichnet,**
**dass** mindestens eine Beleuchtungseinheit (8), insbesondere in Form eines Halogenstrahlers, in den Schirm (6), in das Gehäuse (2), in die Filtereinheit (4) und/oder in die Vorfiltereinheit (11) integriert ist.

10. Abzugshaube (1) nach Anspruch 9,
**dadurch gekennzeichnet,**
**dass** die Beleuchtungseinheit (8) dimmbar ist.

11. Abzugshaube (1) nach einem der vorhergehenden Ansprüche,
**dadurch gekennzeichnet,**
**dass** der Schirm (6), die Filtereinheit (4) und/oder die Vorfiltereinheit (11) in einem Winkel schräg zu einer Rückseite des Gehäuses (2) bzw. einer Wand angeordnet sind.

12. Abzugshaube (1) nach Anspruch 11,
**dadurch gekennzeichnet,**
**dass** der Schirm (6), die Filtereinheit (4) und/oder die Vorfiltereinheit (11) aus der waagerechten Position auslenkbar ausgebildet sind.

13. Abzugshaube (1) nach einem der vorhergehenden Ansprüche,
**dadurch gekennzeichnet,**
**dass** der Schirm (6), die Filtereinheit (4) und/oder die Vorfiltereinheit (11) zur Reinigung oder zum Austausch leicht abnehmbar sind.

14. Abzugshaube (1) nach einem der vorhergehenden Ansprüche,
**dadurch gekennzeichnet,**
**dass** die Fördereinrichtung insbesondere in Form eines Gebläses (3) in dem Gehäuse (2) integriert oder extern angeordnet ist.

15. Abzugshaube (1) nach einem der vorhergehenden Ansprüche,
**dadurch gekennzeichnet,**
**dass** durch Auswahl der Auslassöffnung (5) ein Abluft- oder Umluftbetrieb ermöglicht wird.

16. Abzugshaube (1) nach einem der vorhergehenden Ansprüche,
**dadurch gekennzeichnet,**
**dass** mittels eines Sensors, Messfühlers, oder dergleichen der Verschmutzungs- bzw. Sättigungsgrad der Filtereinheit (4), der Vorfiltereinheit (11) und/oder des Ansaugspaltfilters bestimmbar ist und optisch und/oder akustisch angezeigt wird.

17. Abzugshaube (1) nach einem der vorhergehenden Ansprüche,
**dadurch gekennzeichnet,**
**dass** ein Signal optisch und/oder akustisch den störungsfreien Betrieb, ein Wartungsintervall und/oder eine Funktionsbeeinträchtigung signalisiert.

18. Verfahren zur Absaugung und/oder Aufreinigung eines mit festen und/oder flüssigen Stoffen kontaminierten Trägerstoffes, insbesondere von Dunst oder Kochdunst, mittels einer Abzugshaube (1) gemäß vorhergehenden Ansprüchen 1 bis 17,
**dadurch gekennzeichnet,**
**dass** vor Eintritt in die Filtereinheit (4) ein Teilstrom (Pₕ) des abzusaugenden und/oder aufzureinigenden Trägerstoffes eine Vorfiltereinheit (11) passiert, die unter Ausnutzung der Wirbelstromtechnik mindestens einen Wirbelstromfilter aufweist, der insbesondere als Zyklon-, Labyrinth- oder Baffelfilter ausgebildet ist und die Absangung über einer mindestens teilweise umlaufender den Ansaugspalt (10) an der Vorfiltereinheit (11) erfolgt.

## Claims

1. Extractor hood (1) for sucking away and/or cleaning up a carrier substance, particularly cooking vapour, contaminated with solid and/or liquid substances,
- with a housing (2) having at least one inlet and outlet opening (5),
- with a conveying device (3) conveying the carrier substance through the housing (2) and settable in conveying performance,
- with a filter unit (4) flowable through by the conveyed carrier substance and
- with a screen (9) which is mounted upstream of the filter unit (4) on the suction side and which is partly permeable by the carrier substance,
wherein the screen (9) is designed as a prefilter unit (11), **characterised in that** the prefilter unit (11) has, with use of a turbulent current process, at least one turbulent current filter which is constructed as, in particular, a cyclone, labyrinth or baffle filter and that an at least partly encircling suction gap (10) is formed by the screen (9).

2. Extractor hood (1) according to claim 1, **characterised in that** the permeability of the screen (9) to the carrier substance is settable.

3. Extractor hood (1) according to one of the preceding claims, **characterised in that** the throughflow quantity of carrier substance through the prefilter unit (11) is settable by means of at least one additional conveying device, particularly by a fan.

4. Extractor hood (1) according to one of the preceding claims, **characterised in that** the quantity of the carrier substance flowing through the suction gap (10) can be regulated by a change in the suction gap width.

5. Extractor hood (1) according to one of the preceding claims, **characterised in that** a filter is similarly arranged in the suction gap (10).

6. Extractor hood (1) according to one of the preceding claims, **characterised in that** the permeability of the screen (9) to the carrier substance varies in dependence on region.

7. Extractor hood (1) according to one of the preceding claims, **characterised in that** a screen (6) serving for enlargement of an intake region is arranged at the housing (2).

8. Extractor hood (1) according to claim 7, **characterised in that** the screen (6) consists at least partly of transparent material (glass).

9. Extractor hood (1) according to one of the preceding claims, **characterised in that** at least one lighting unit (8), particularly in the form of a halogen radiator, is integrated in the screen (6), in the housing (2), in the filter unit (4) and/or in the prefilter unit (11).

10. Extractor hood (1) according to claim 9, **characterised in that** the lighting unit (8) is dimmable.

11. Extractor hood (1) according to one of the preceding claims, **characterised in that** the screen (6), the filter unit (4) and/or the prefilter unit (11) are arranged at an angle obliquely with respect to a rear side of the housing (2) or a wall.

12. Extractor hood (1) according to claim 11, **characterised in that** the screen (6), the filter unit (4) and/or the prefilter unit (11) are constructed to be deflectable out of the horizontal position.

13. Extractor hood (1) according to one of the preceding claims, **characterised in that** the screen (6), the filter unit (4) and/or the prefilter unit (11) are easily removable for cleaning or for exchange.

14. Extractor hood (1) according to one of the preceding claims, **characterised in that** the conveyor device is integrated, particularly in the form of a fan (3), in the housing (2) or arranged externally.

15. Extractor hood (1) according to one of the preceding claims, **characterised in that** an exhaust air or circulating air operation is made possible by selection of the outlet opening (5).

16. Extractor hood (1) according to one of the preceding claims, **characterised in that** the degree of contamination or saturation of the filter unit (4), the prefilter unit (11) and/or the suction gap filter is determinable and optically and/or acoustically indicated by means of a sensor, measuring detector or the like.

17. Extractor hood (1) according to one of the preceding claims, **characterised in that** a signal optically and/or acoustically signals disturbance-free operation, a maintenance interval and/or a functional impairment.

18. Method for suction away and/or cleaning up a carrier substance, particularly of fumes or cooking vapour, contaminated with solid and/or liquid substances, by means of an extractor hood according to preceding claims 1 to 17, **characterised in that** prior to entry into the filter unit (4) a part flow (Pₕ) of the carrier substance, which is to be sucked away and/or cleaned up, passes a prefilter unit (11), which has, with use of a turbulent flow process, at least one turbulent flow filter, which is constructed as, in particular, a cyclone, labyrinth or baffle filter, and the sucking away is carried out by way of an at least partly encircling suction gap (10) at the prefilter unit (11).

## Revendications

1. Hotte d'extraction (1) pour l'aspiration et/ou la purification d'une substance porteuse contaminée avec des substances solides et/ou liquides, en particulier de la vapeur de cuisson, comprenant
- un boîtier (2) présentant au moins une ouverture d'entrée et une ouverture de sortie (5),
- un dispositif de transport (3) acheminant la substance porteuse à travers le boîtier (2) et réglable dans le débit,
- une unité de filtrage (4) pouvant être traversée par la substance porteuse transportée et
- une paroi-écran (9) disposée en amont de l'unité de filtrage (4) sur le côté aspiration est en partie perméable à la substance porteuse,
la paroi-écran (9) étant conçue comme une unité de préfiltrage (11),
**caractérisée en ce que**
l'unité de préfiltrage (11) présente au moins un filtre à courant tourbillonnaire en utilisant une technique de courant tourbillonnaire, qui est conçu en particulier sous forme de filtre à cyclone, filtre à labyrinthe ou filtre à chicane, et **en ce qu'**une fente d'aspiration (10) au moins en partie périphérique est formée par la paroi-écran (9).

2. Hotte d'extraction (1) selon la revendication 1,
**caractérisée en ce que**
la perméabilité à la substance porteuse de la paroi-écran (9) est réglable.

3. Hotte d'extraction (1) selon l'une quelconque des revendications précédentes,
**caractérisée en ce que**,
par au moins un dispositif de transport supplémentaire, le débit de substance porteuse traversant l'unité de préfiltrage (11) est réglable, en particulier par une soufflerie.

4. Hotte d'extraction (1) selon l'une quelconque des revendications précédentes,
**caractérisée en ce que**
la quantité de la substance porteuse, qui traverse la fente d'aspiration (10), peut être réglée par une variation de la largeur de la fente d'aspiration.

5. Hotte d'extraction (1) selon l'une quelconque des revendications précédentes,
**caractérisée en ce que**
un filtre est disposé également dans la fente d'aspiration (10).

6. Hotte d'extraction (1) selon l'une quelconque des revendications précédentes,
**caractérisée en ce que**
la perméabilité à la substance porteuse de la paroi-écran (9) varie en fonction de la zone.

7. Hotte d'extraction (1) selon l'une quelconque des revendications précédentes,
**caractérisée en ce que**
un écran (6) servant à l'agrandissement d'une zone d'introduction est disposé sur le boîtier (2).

8. Hotte d'extraction (1) selon la revendication 7,
**caractérisée en ce que**
l'écran (6) est au moins en partie à base de matériau transparent (verre).

9. Hotte d'extraction (1) selon l'une quelconque des revendications précédentes,
**caractérisée en ce que**
au moins une unité d'éclairage (8), en particulier sous la forme d'un projecteur à halogène, peut être intégrée dans l'écran (6), dans le boîtier (2), dans l'unité de filtrage (4) et/ou dans l'unité de préfiltrage (11).

10. Hotte d'extraction (1) selon la revendication 9,
**caractérisé en ce que**
l'unité d'éclairage (8) est variable en lumière.

11. Hotte d'extraction (1) selon l'une quelconque des revendications précédentes,
**caractérisée en ce que**
l'écran (6), l'unité de filtrage (4) et/ou l'unité de préfiltrage (11) sont disposés dans un angle en biais par rapport à un côté arrière du boîtier (2) resp. à une paroi.

12. Hotte d'extraction (1) selon la revendication 11,
**caractérisée en ce que**
l'écran (6), l'unité de filtrage (4) et/ou l'unité de préfiltrage (11) sont conçus de façon à pouvoir être déviés à partir de la position horizontale.

13. Hotte d'extraction (1) selon l'une quelconque des revendications précédentes,
**caractérisée en ce que**
l'écran (6), l'unité de filtrage (4) et/ou l'unité de préfiltrage (11) peuvent être enlevés facilement pour le nettoyage ou pour le remplacement.

14. Hotte d'extraction (1) selon l'une quelconque des revendications précédentes,
**caractérisée en ce que**
le dispositif de transport est intégré en particulier sous forme d'une soufflerie (3) dans le boîtier (2) ou est disposé à l'extérieur.

15. Hotte d'extraction (1) selon l'une quelconque des revendications précédentes,
**caractérisée en ce que**
un mode évacuation d'air ou un mode circulation d'air est rendu possible par le choix de l'ouverture de sortie (5).

16. Hotte d'extraction (1) selon l'une quelconque des revendications précédentes,
**caractérisée en ce que**
le degré d'encrassement resp. de saturation de l'unité de filtrage (4), de l'unité de préfiltrage (11) et/ou du filtre à fente d'aspiration peut être déterminé au moyen d'un capteur, d'une sonde de mesure ou similaire et/ou est affiché de façon visuelle et/ou sonore.

17. Hotte d'extraction (1) selon l'une quelconque des revendications précédentes,
**caractérisée en ce que**
un signal signale de façon visuelle et/ou sonore le mode sans incident, un intervalle d'entretien et/ou une altération de fonction.

18. Procédé pour l'aspiration et/ou l'épuration d'une substance porteuse contaminée avec des substances solides et/ou liquides, en particulier de vapeur ou de vapeur de cuisson, au moyen d'une hotte d'extraction (1) selon des revendications 1 à 17 précédentes,
**caractérisé en ce que**
avant l'entrée dans l'unité de filtrage (4), un flux partiel (Pₕ) de la substance porteuse à aspirer et/ou à épurer passe dans une unité de préfiltrage (11), qui présente au moins un filtre à courant tourbillonnaire en utilisant la technique de courant tourbillonnaire, qui est conçu en particulier sous forme de filtre à cyclone, à labyrinthe ou à chicane et l'aspiration s'effectue au moyen d'une fente d'aspiration (10) au moins en partie périphérique sur l'unité de préfiltrage (11).
